# EUROPEAN PATENT SPECIFICATION

(11) **EP 0 993 137 B1**
(45) Date of publication and mention of the grant of the patent: **21.12.2005**
(21) Application number: 98308091.2
(22) Date of filing: 05.10.1998
(51) Int. Cl.: H04J 13/02

(54) **CDMA communication system and method**
CDMA Kommunikationssystem und Verfahren
Système et procédé de communications AMRC

(43) Date of publication of application: 12.04.2000
(73) Proprietor: LUCENT TECHNOLOGIES INC., Murray Hill, New Jersey 07974-0636 (US)
(72) Inventor: Cao, Qiang, Swindon, Wiltshire SN5 7EG (GB); Lin, Jie, Swindon, Wiltshire SN2 3UP (GB); Lim, Seau Sian, Swindon, Wiltshire SN1 3LD (GB); Stanton, James Leslie, Basingstoke, Hampshire RG24 8SY (GB); Reader, David Jonathan, London W4 3AS (GB); Freiberg, Lorenz Fred, Swindon, Wilts SN5 6HG (GB)
(74) Representative: Williams, David John

(56) References cited:
- EP-A- 0 600 713
- WO-A-95/23464
- US-A- 5 619 491

## Description

### Field of the Invention

The present invention relates to communication systems and in particular to Universal Mobile Telecommunication Service (UMTS) Wide-Band Code Division Multiple Access (W-CDMA) systems.

### Background to The Invention

Traditionally, user traffic in a CDMA system is circuit switched and based on 'single user per code'. Once a call has been set up, the connection is maintained throughout the duration of the service request. A Dedicated Traffic Channel (DTCH) is assigned to each active user for both the up-link and the down-link. Each DTCH is characterised by a unique spreading code, i.e. each user is allocated a code ('single user per code'). Throughout the entire session, the DTCH is used exclusively by the active user.

This circuit switched method is robust, and results in high system capacity by supporting macro-diversity (soft hand-over), power control, and limited overhead. However, in wide-band multi-service CDMA systems bursty traffic needs to be supported. Bursty traffic is supported by adjusting the data rate, and hence the spreading factor and spreading code. The need to quickly adjust the spreading code leads to highly complex code allocation algorithms.

Another popular method for accommodating bursty services is through packet switched data. ETSI (European Telecommunications Standards Institute) UMTS W-CDMA and ARIB (Association of Radio Industry Business) W-CDMA propose to use Random Access Channel (RACH)/Forward Access Channel (FACH) to transmit infrequent bursty packet data. The advantage of such a scheme is that there is a quick set up time, and a dedicated channel is not required. However, the transmission mechanism uses open loop power control only, and macro-diversity is not supported.

It is a well-known problem for the UMTS W-CDMA air interface that the shortage of down-link codes is a problem. In the prior art, only one down-link scrambling code is used. Associated with each scrambling code is a channelisation code tree. A set of codes, i.e. a branch of the code trees, is allocated to each user (a code set is allocated to facilitate peak data rate) The code sets used by each user are orthogonal to each other.

So as long as the timing of each user code (from the code set) is strictly controlled, there will be no increase in the interference level (or cross-correlation properties). Since there is only one down-link scrambling code and a code set is assigned to the peak data rate of each user, the code shortage problem arises. Increasing the number of scrambling codes (which is not orthogonal) does relax the problem. However it worsens the cross-correlation properties and affects the system capacity. Moreover it does not improve the code usage efficiency.

This problem is particularly increased for data transmission where the code channels are allocated to bursty packet data users, because of inefficient usage of the code due to the bursty nature of the packet switching service.

Each jump in data rate requires a change in physical channel and hence a change in code. So over time, many different codes are used. If the data rate is too high to be accommodated by a single physical channel, then multiple codes are used simultaneously.

In the up-link, each user is assigned a unique scrambling code, each scrambling code being associated with a channelisation code tree. Hence there is no code shortage problem.

It has been suggested to introduce another layer of coding, thereby increasing the number of scrambling codes per cell, to mitigate the problem. However increasing the number of scrambling codes per cell does not help to increase code efficiency, and also increases the complexity of the receiver.

To simplify code allocation and increase code utilisation efficiency it has been suggested to transmit packet data by multiplexing many bursty packet data users onto a single physical dedicated traffic channel. This multiplexing scheme uses two established techniques for packet data transmission: multiple packet data users use a common control channel; and each packet data user is allocated a single dedicated physical channel.

This scheme does have advantages over both RACH/FACH and 'single user per code' transmission schemes for packet data transmission, in that the proposed scheme simplifies orthogonal spreading code allocation whilst maintaining the benefit of per user per code transmission (i.e. closed loap power control). The drawback of this approach is that it achieves the goal of efficient code by use requiring an unnecessarily large level of overhead, and providing unneeded flexibility than that which is strictly necessary to achieve the goal. It is therefore an object of the present invention to provide a technique for transmitting packet data, which minimises the problems, associated with down-link code shortage in conventional systems, and which requires minimal modification to the physical layer structure, at minimum levels of additional overhead.

It is known from International (P.C.T.) Patent Publication WO 95/23464 to provide a method of transmitting data in a code division multiple access system, comprising the steps of:
It is known from International (P.C.T.) Patent Publication WO 95/23464 to provide a method of transmitting data in a code division multiple access system, comprising the steps of:
   outputting data blocks associated with a plurality of respective users in a plurality of corresponding data streams.

It is known from European patent application EP-A-0600713 to provide a method of transmitting data in a code division multiple access system, comprising the steps of:
outputting data blocks associated with a plurality of respective users in a plurality of corresponding data streams, the data blocks of each data stream being arranged in successive time frames; and
multiplexing the data blocks of all the data streams for each given time frame.

### Summary of the Invention

The present invention is characterised over the disclosure of EP-A-0600713 by encoding for transmission the multiplexed data blocks of each given time frame using a single channelisation code, and in that higher level signalling is used to differentiate the data blocks of the different users.

There is thus proposed a scheme to multiplex many packet data users onto a single down-link shared channel in order to mitigate both code allocation algorithm complexity and down-link code shortage problems for a UMTS W-CDMA system. A composite transport block concept is used when multiplexing is performed.

### Brief Description of the Drawings

Figure 1 illustrates schematically part of the UMTS layer structure;
Figure 2 illustrates the transport blocks supplied to the physical layer in an exemplary three-user system;
Figure 3 is a schematic of a conventional implementation of the physical layer for processing the transport blocks of Figure 2;
Figure 4 illustrates conceptually the processing of the transport blocks according to the present invention in an exemplary three user system; and
Figure 5 is a schematic of an implementation of the physical layer for processing the transport blocks of Figure 4 according to the present invention.

### Description of Preferred Embodiment

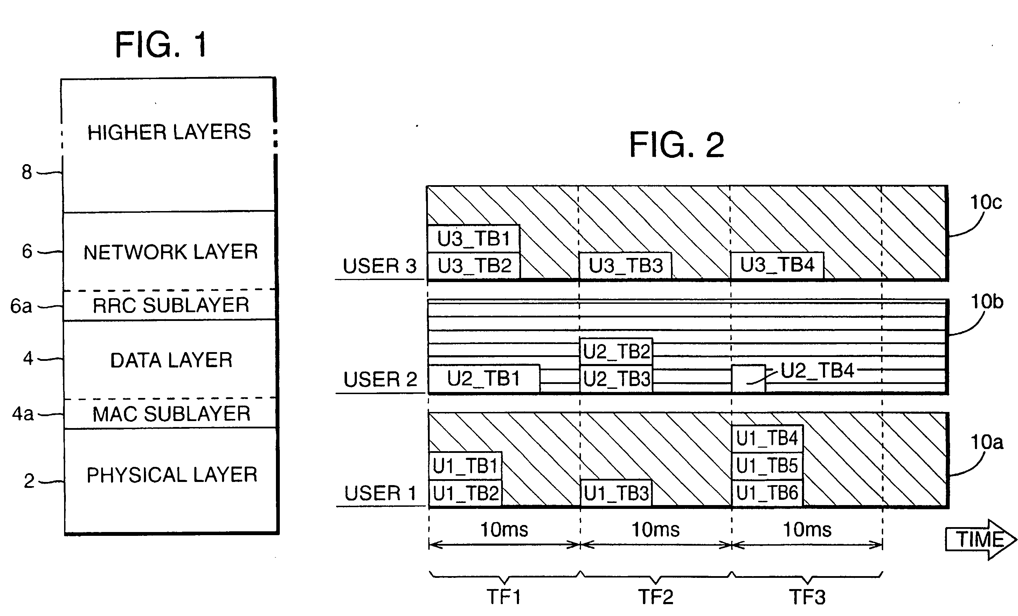

Referring to Figure 1 there is illustrated the layers that are invoked across the interface between a mobile user and a base station. The lowest layer 2 (layer 1) is the physical layer, the next layer 4 (layer 2) is the data layer, and the next layer 6 (layer 3) is the network layer. Additional, higher layers are represented in Figure 1 for purposes of illustration by reference numeral 8. As illustrated further in Figure 1, the data layer 4 includes a Medium Access Control (MAC) sub-layer 4a, and the network layer 6 includes a Radio Resource Control (RRC) sub-layer 6a.

The RRC sub-layer 6a is responsible for allocating radio resources, for example codes, time slots, frequency bands. In the MAC sub-layer 4a the data streams from individual users are converted into transport blocks, for further processing in the physical layer. The physical layer further processes the transport blocks for transmission over the air interface, by coding, interleaving, multiplexing etc. One skilled in the art will be familiar with the standard, known implementations of the layers shown in Figure 1.

Figure 2 illustrates the standard format of the data packets passed from the MAC sub-layer 4 to the physical layer 2. For the purposes of the following description a W-CDMA system having three users will be described, but it will be appreciated that in practice a W-CDMA system includes a significantly higher number of users.

Referring to Figure 2, each user is associated with a data stream including data from that user to be transmitted, user 1, user 2, and user 3. The arrows 10a, 10b, 10c represent the direction of data flow for each user. As can be seen from Figure 2, the data for each user is separated into a number of fixed length time frames, TF1, TF2, and TF3 etc. The length of the time frames is identical for each user. Each time frame is, in this particular example, 10ms in length. The length of successive time frames may vary.

For the user 1 data stream, time frame TF1 includes user 1 transport blocks U1_TB1 and U1_TB2, time frame TF2 includes user 1 transport block U1_TB3, and time frame TF3 includes user 1 transport blocks U1_TB4, U1_TB5, and U1_TB6. For the user 2 data stream, time frame TF 1 includes user 2 transport block U2_TB1, time frame TF2 includes user 2 transport blocks U2_TB2 and U2_TB3, and time frame TF3 includes user 2 transport block. U2_TB4. For the user 3 data stream, time frame TF1 includes user 3 transport blocks U3_TB 1 and U3_TB2, time frame TF2 includes user 3 transport blocks U3_TB3, and time frame TF3 includes user 3 transport block U3_TB4.

The transport blocks in each frame are shown in Figure 2 to have different sizes to represent different data rates. In any user channel the data rate may vary from frame to frame. Thus the data rate in the user 3 data stream may vary between time frame TF1 and time frame TF2 for instance. Within a time frame, such as time frame TF1, the data rate may vary, and most likely will vary, between the different data streams user 1, user 2, and user 3.

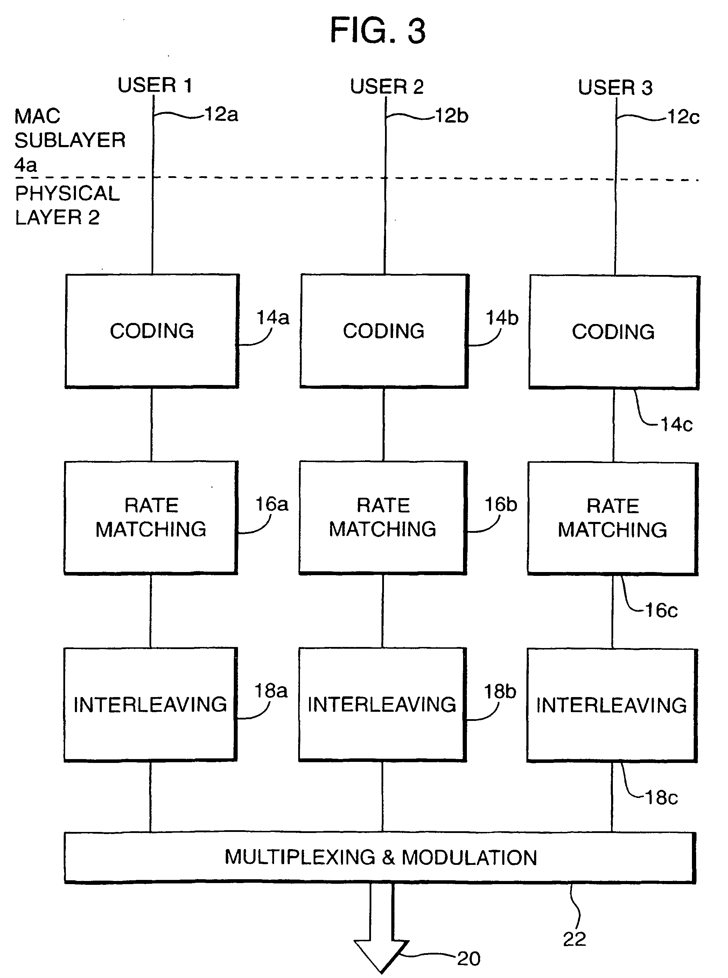

The processing of the transport blocks in the user data streams according to one conventional solution will now be briefly described with reference to Figure 3. Figure 3 is a simplified view of the main functional blocks implemented in the physical layer 2, the full implementation of which for any particular application will be within the scope of the skilled person.

The transport blocks from the user 1 data stream are presented from the MAC sub-layer 4a to a signal line 12a forming an input to the physical layer. The transport blocks from the user 2 data stream are presented from the MAC sub-layer 4a to a signal line 12b forming an input to the physical layer. The transport blocks from the user 3 data stream are presented from the MAC sub-layer 4a to a signal line 12c forming an input to the physical layer. The transport blocks from each user data stream are input serially on the respective signal lines 12a, 12b and 12c to the physical layer 2.

As can be seen from Figure 3, associated with each user data stream user 1, user 2, and user 3 there is a respective coding block 14a, 14b, 14c, rate matching block 16a, 16b, 16c, and interleaving block 18a, 18b, 18c. The coding blocks 14a, 14b, and 14c encode the transport blocks received from the respective user data streams in accordance with the encoding scheme being implemented in the application. Different channelisation codes are allocated to each user data stream to accommodate different data rates. Thus in systems where there are a large number of users a large number of down-link codes are required.

The rate matching blocks 16a, 16b, and 16c adapt the data rate of the transport blocks received from the user data streams to the necessary data rate for transmission on the air interface. As one skilled in the art will appreciate, this may involve both static rate matching and dynamic rate matching (on the up-link only).

The interleaving blocks 18a, 18b, and 18c perform the interleaving of the data packets from the user channels. As will be again familiar to one skilled in the art, this interleaving may be either inter-frame or intra-frame, and is utilised to minimise the adverse affects of fading in the air interface.

The thus processed respective transport blocks from the data stream for each of the users are then presented to a multiplexing and modulation block 22. The multiplexor and modulation block 22 multiplexes the processed data packets received from the three user data streams into a single signal, and then processes this signal by way of, for example, applying the carrier frequency, before the multiplexed signal is transmitted on the air interface as represented by the signal 20 at the output of the multiplexing and modulation block 22.

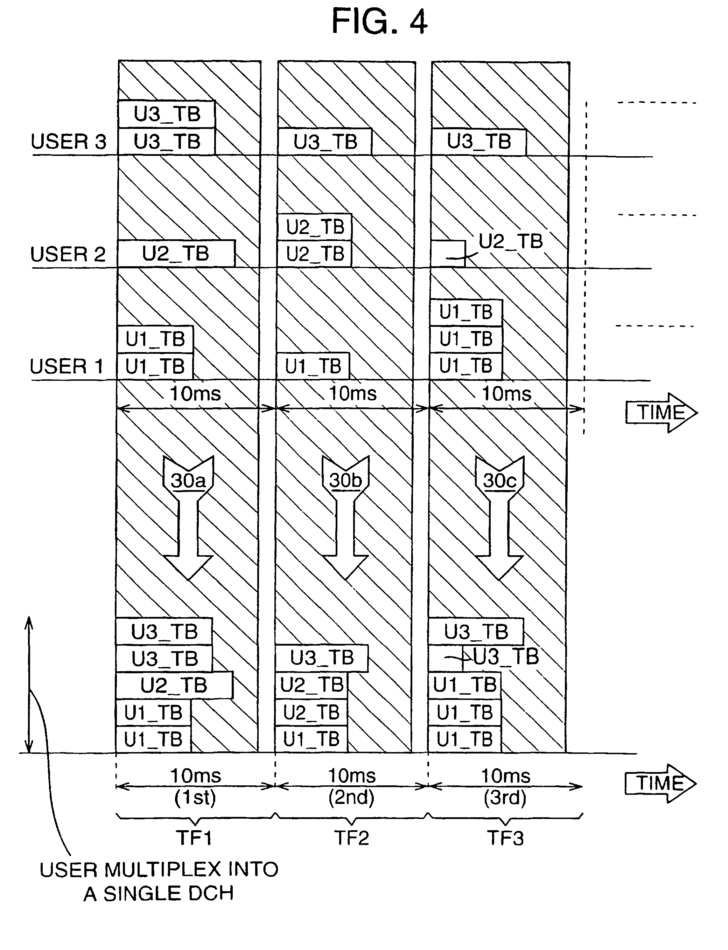

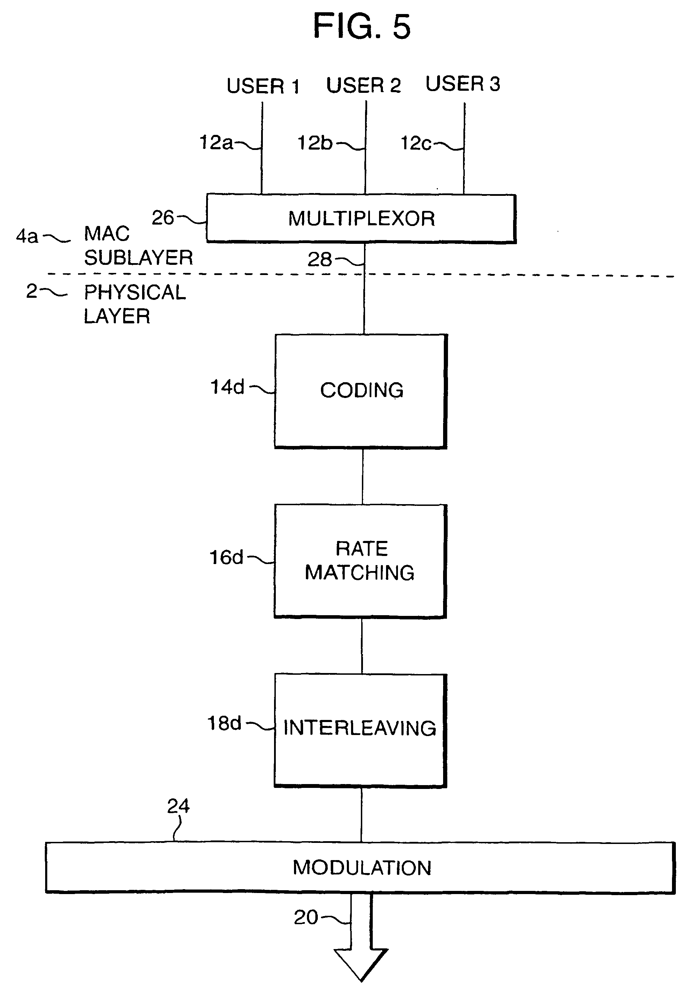

The present invention offers a new approach to the processing of the transport blocks in the user data streams shown in Figure 2. The inventive approach is best exemplified by reference to Figure 4. Figure 4 corresponds to Figure 2, and where appropriate the same legend and reference numerals have been used to illustrate like elements. The top half of Figure 4 is identical to Figure 2. The invention as exemplified by Figure 4 will now be described with additional reference to Figure 5, which illustrates schematically an implementation of the physical layer 2 for applying the present invention.

A multiplexor 26 is provided in the MAC sub-layer 4a and receives as inputs the transport blocks from each of the respective user data streams on lines 12a, 12b and 12c. The multiplexor multiplexes the transport blocks received from all user data streams in a corresponding time frame into a single signal on line 28.

Thus the transport blocks U1_TB1,U1_TB2, U2_TB1, U3_TB1, and U3_TB2 all received in time frame TF1 from the three user data streams are multiplexed onto a single signal line 28 by the multiplexor 26. Similarly for the time frames TF2 and TF3 the transport blocks received in those time frames for all user data streams are multiplexed onto a single signal line.

The thus created single signal data line containing the transport blocks for all users in a given time frame are presented to, respectively, a coding block 14d, a rate matching block 16d and an interleaving block 18d, which each operate to process the multiplexed transport blocks in identical fashion to the coding, rate matching and interleaving blocks of Figure 3.

The processed transport blocks are then presented to a modulation block 24 for transmission on the air interface as signals 20. The modulation block corresponds to the multiplexing and modulation block 22 of Figure 3, other than that the need for multiplexing is eliminated by the implementation shown in Figure 5. The elimination of the multiplexing does not change the physical structure of the code/multiplexing unit of the physical layer (the units 14, 16, 18 and 22 of Figure 3). The invention reduces the complexity of this unit, as well as the need to have a code/multiplexing unit for each user.

In the conventional arrangement illustrate by Figure 3, users are allocated different channelisation codes. In the approach of the present invention, many users are multiplexed on the MAC sub-layer 4a into a single stream as shown in Figures 4 and 5, and a single channelisation code utilised. Thus the problem of a shortage of codes in the down-link is eliminated and channelisation code management is simplified..

The multiplexed transport blocks of each time frame of each user data stream are referred to as composite transport blocks. Higher level signalling is used to differentiate the transport blocks of the different users.

In the coding block 14d, the physical layer also adds control header (pilot signal, power control, and rate information) onto the user's transport blocks to guarantee the transmission quality over the air. Normal UMTS physical layer procedure will apply at this stage.

The users to be multiplexed in the multiplexor 26 have a common Transport Format set which defines the valid set of transport formats for the down-link shared transport channel (DSCH) transport channel. With every addition and removal of users using the DSCH Transport Channel, the DSCH combination set will be updated. Each user sharing the down-link channel will be informed about the changes via the signalling link established at the Radio Resource Control (RRC) connection set-up. Handshaking of the use of the updated combination set between the base station and user is synchronised via the signalling link.

The users employing the down-link shared transport channel are multiplexed at the MAC sub-layer according to the transport format selected. This user multiplexing is just time multiplexing of different user transport blocks and is arranged in the order specified by the Transport Format (selected from a Transport Format Set).

The user-multiplexed transport block set is then delivered to the common coding unit, which is configured by the information contained in transport format selected via the Transport Format Indicator (TFI).

At the receiver, the TFI contained in the received data stream will be extracted and the information from the transport format contained in the DSCH combination set is used to configure decoding and de-multiplexing units. At the receiver MAC sub-layer, the transport block set from each user will be de-multiplexed according to the information contained in the Transport Format. From the knowledge of the number of transport blocks and the transport block size from the transport format, the transport block set belonging to the user can be extracted.

The number of composite transport blocks in a time frame is decided according to the individual users quality of service requirements (for example, delay, transmission rate etc.). Many composite transport blocks in one transmission interval (time frame) implies the possible use of multi-code transmission over the air interface. When there are too many composite transport blocks in one transmission interval. MAC sub-layer 4a may apply scheduling function to prioritise user traffic.

It will be appreciated that the number of times the coding, rate matching, and interleaving blocks are required to be duplicated in Figure 3 is directly dependent upon the number of users. In the present invention according to Figure 5, however, there is no increased circuitry overhead for increased numbers of users. By incorporating the multiplexing function in the MAC sub-layer 4a, the complexity of the physical layer 2 is significantly simplified for systems having many users. In implementing the present invention, deployment of a single processing unit is required, whereas multiple processing units must be used in the conventional arrangement.

The present invention thus does not require any structural change to the defined physical layer coding/multiplexor unit.

Providing the user multiplexor above the coding unit (14d) incurs slightly more processing overhead in both the MAC and RRC sub-layers, since more intelligence is needed to multiplex the user and allocate resources. However, a method is provided that is simpler than known schemes, with less unneeded flexibility, which means less overhead.

The MAC sub-layer 4a scheduling function can be utilised in combination with the present invention to prioritise user traffic when there are too many composite transport blocks in one transmission interval or time frame. This is possible, as packet data is bursty in nature and normally delay non-sensitive.

## Claims

1. A method of transmitting data in a code division multiple access system, comprising the steps of:
outputting data blocks associated with a plurality of respective users in a plurality of corresponding data streams (Fig. 5: 12a, 12b, 12c), the data blocks of each data stream being arranged in successive time frames; and
multiplexing (26,28) the data blocks of all the data streams for each given time frame **characterised by** encoding (14d) for transmission the multiplexed data blocks of each given time frame using a single channelisation code, and in that higher level signalling is used to differentiate the data blocks of the different users.

2. The method of claim 1 in which the successive time frames are of variable length.

3. The method of claim 1 or claim 2 in which the data blocks are transport blocks.

4. The method of any preceding claim in which the outputting and multiplexing (26) steps are carried out in the multiple access sub-layer (4a).

5. The method of any preceding claim in which the encoding steps (14d) are carried out in the physical layer.

6. The method of claim 3 in which the transport blocks in each time frame of each user data stream are of different data rates.

7. A code division multiple access communication system, in which data is transmitted in a plurality of data streams (Fig. 5: 12a, 12b, 12c), each data stream being associated with one of a plurality of user terminals, each user data stream comprising data blocks associated with each user being arranged in time frames, wherein the data blocks in corresponding time frames of each user data stream are multiplexed (26) onto a single channel (28) **characterised in that** the multiplexed data blocks of each given time frame are encoded (14d) using a single channelisation code, and **in that** higher level signalling is used to differentiate the data blocks of the different users.

8. The code division multiple access communication system of claim 7 in which the successive time frames are of a variable length.

## Patentansprüche

1. Verfahren zum Übertragen von Daten in einem Codemultiplexzugriffsverfahren (code division multiple access) mit folgenden Schritten:
Ausgeben von einer Mehrzahl von jeweiligen Benutzern zugeordneten Datenblöcken in einer Mehrzahl von entsprechenden Datenströmen (Fig. 5: 12a, 12b, 12c), wobei die Datenblöcke jedes Datenstroms in aufeinanderfolgenden Zeitrahmen angeordnet sind; und
Multiplexen (26, 28) der Datenblöcke aller Datenströme für jeden gegebenen Zeitrahmen, **gekennzeichnet durch** Codieren (14d) zur Übertragung der gemultiplexten Datenblöcke jedes gegebenen Zeitrahmens unter Verwendung eines einzelnen Kanaleinteilungscodes, und **dadurch**, daß Zeichengabe auf höherer Ebene zum Unterscheiden der Datenblöcke der verschiedenen Benutzer benutzt wird.

2. Verfahren nach Anspruch 1, wobei die aufeinanderfolgenden Zeitrahmen veränderlicher Länge sind.

3. Verfahren nach Anspruch 1 oder Anspruch 2, wobei die Datenblöcke Transportblöcke sind.

4. Verfahren eines beliebigen vorhergehenden Anspruchs, wobei die Schritte des Ausgebens und Multiplexens (26) auf der Vielfachzugriffs-Teilschicht (4a) ausgeführt werden.

5. Verfahren nach einem beliebigen vorhergehenden Anspruch, wobei die Codierungsschritte (14d) auf der physikalischen Schicht ausgeführt werden.

6. Verfahren nach Anspruch 3, wobei die Transportblöcke in jedem Zeitrahmen jedes Benutzerdatenstroms unterschiedliche Datenraten aufweisen.

7. Codemultiplexzugriffs-Kommunikationssystem, bei dem Daten in einer Mehrzahl von Datenströmen (Fig. 5: 12a, 12b, 12c) übertragen werden, wobei jeder Datenstrom einer Mehrzahl von Benutzerendgeräten zugeordnet ist, wobei jeder Benutzerdatenstrom jedem Benutzer zugeordnete, in Zeitrahmen angeordnete Datenblöcke umfaßt, wobei die Datenblöcke in entsprechenden Zeitrahmen für jeden Benutzerdatenstrom auf einen einzelnen Kanal (28) gemultiplext (26) werden, **dadurch gekennzeichnet, daß** die gemultiplexten Datenblöcke jedes gegebenen Zeitrahmens unter Verwendung eines einzelnen Kanaleinteilungscodes codiert werden (14d), und daß zum Unterscheiden der Datenblöcke der verschiedenen Benutzer Zeichengabe auf höherer Ebene benutzt wird.

8. Codemultiplexzugriffs-Kommunikationssystem nach Anspruch 7, wobei die aufeinanderfolgenden Zeitrahmen veränderlicher Länge sind.

## Revendications

1. Procédé de transmission de données dans un système à accès multiple par différence de code, comprenant les étapes de :
sortie de blocs de données associés à une pluralité d'utilisateurs respectifs dans une pluralité de trains de données correspondants (figure 5 : 12a, 12b, 12c), les blocs de données de chaque train étant agencés dans des trames de temps succcessives; et
multiplexage (26, 28) des blocs de données de tous les trains de données pour chaque trame de temps donnée **caractérisé par** le codage (14d) pour la transmission des blocs de données multiplexés de chaque trame de temps donnée en utilisant un code unique de découpage en canaux, et en ce qu'une signalisation de niveau supérieur est utilisée pour différencier les blocs de données des différents utilisateurs.

2. Procédé selon la revendication 1, dans lequel les trames de temps successives sont de longueur variable.

3. Procédé selon la revendication 1 ou la revendication 2, dans lequel les blocs de données sont des blocs de transport.

4. Procédé selon l'une quelconque des revendications précédentes, dans lequel les étapes de sortie et de multiplexage (26) sont effectuées dans la sous-couche d'accès multiple (4a).

5. Procédé selon l'une quelconque des revendications précédentes, dans lequel les étapes de codage (14d) sont effectuées dans la couche physique.

6. Procédé selon la revendication 3, dans lequel les blocs de transport dans chaque trame de temps de train de données de chaque utilisateur sont à des débits de données différents.

7. Système de communication à accès multiple par différence de code, dans lequel des données sont transmises dans une pluralité de trains de données (figure 5 : 12a, 12b, 12c), chaque train de données d'utilisateur comprenant des blocs de données associés à chaque utilisateur étant agencé dans des tranches de temps, dans lequel les blocs de données dans des tranches de temps correspondantes de chaque train de données d'utilisateur sont multiplexés (26) sur un même canal (28) **caractérisé en ce que** les blocs de données multiplexés de chaque trame de temps donnée sont codés (14d) en utilisant un code unique de découpage en canaux, et **en ce qu'**une signalisation de niveau supérieur est utilisée pour différencier les blocs de données des différents utilisateurs.

8. Système de communication à accès multiple par différence de code selon la revendication 7, dans lequel les trames de temps successives sont de longueur variable.
